# EUROPÄISCHE PATENTANMELDUNG

(11) **EP 1 084 607 A1**
(43) Veröffentlichungstag der Anmeldung: **21.03.2001**
(21) Anmeldenummer: 00119698.9
(22) Anmeldetag: 09.09.2000
(51) Int. Cl.: A01G 25/09, B05B 9/04

(54) **Verfahrbare Speichervorrichtung**

(30) Priorität: 16.09.1999 DE 29916317 U
(71) Anmelder: Koch, Ludwig, 64319 Pfungstadt (DE)
(72) Erfinder: Koch, Ludwig, 64319 Pfungstadt (DE)
(74) Vertreter: Helber, Friedrich G., Dipl.-Ing.

(57) **Zusammenfassung**

Speichervorrichtung (10) zum Speichern, Transportieren und Abgeben von Wasser mit einem auf einem Fahrgestell (12) gehalterten, über einen Einlass mit Wasser befüllbaren Behälter und mit einer an einem Auslass des Behälters angeschlossenen, wahlweise zu betätigenden Abgabearmatur (30; 32).

Der Behälter ist als Druckbehälter (16) ausgebildet, wobei Mittel zur Ausübung von Druckkräften auf das im Behälter (16) eingefüllte Wasser vorgesehen sind. Zumindest der Auslass ist in einem den auf das Wasser einwirkenden Druckkräften diametral gegenüberliegenden Bereich des Behälters vorgesehen.

Die Mittel zur Ausübung von Druckkräften auf das im Behälter abgefüllte Wasser können dabei von einem im Druckbehälter selbst oder einem am Druckbehälter angeschlossenen Druck-Ausgleichsbehälter vorgesehenen, unter Druckvorspannung stehenden Druckgas gebildet werden.

## Beschreibung

Die Erfindung betrifft eine Speichervorrichtung zum Speichern, Transportieren und Abgeben von Wasser mit einem auf einem verfahrbaren Fahrgestell gehalterten, über einen Einlass mit Wasser befüllbaren Behälter und mit einer an einem Auslass des Behälters angeschlossenen, wahlweise zu betätigenden Abgabearmatur.

Zur Bewässerung von Beeten in Gärten und insbesondere des Pflanzbewuchses von Gräbern auf Friedhöfen werden heute noch in vielen Fällen Gießkannen verwendet, die an gesonderten Wasserzapfstellen befüllt und dann an den Einsatzort getragen werden müssen. Insbesondere für schwache oder ältere Menschen stellt der Transport der Gießkanne eine schwierige Aufgabe dar, da eine gefüllte Gießkanne mit beispielsweise 10 oder 15 Litern Füllinhalt ein hohes Gewicht hat. Um dieses Problem zu lösen, wurde bereits vorgeschlagen, anstelle von zu tragenden Gießkannen einen Wasserbehälter geeigneter Größe durch Räder verfahrbar auszubilden und im Behälter eine von einer Solarzelleneinrichtung antreibbare Pumpe anzuordnen, welche das im Behälter eingefüllte Wasser über einen Behälterschlauch gezielt auszubringen erlaubt (WO 96/22013) . Die Leistung der Förderpumpe ist in diesem Fall von der zur Verfügung stehenden elektrischen Energie abhängig, so dass sie bei direkter Beaufschlagung der Förderpumpe mit dem von Solarzellen gelieferten Strom in Abhängigkeit von der Witterung und der Tageszeit unterschiedlich ausfällt. Bei beginnender Dunkelheit steht dann überhaupt keine elektrische Energie für den Antrieb der Förderpumpe zur Verfügung. Als Alternative werden deshalb der Anschluss an eine externe Stromquelle oder die Anordnung einer Akkumulatoreinheit am oder im Behälter selbst vorgeschlagen. Die erste Lösung erfordert das Vorhandensein eines Stromanschlusses in der Nähe des Einsatzortes, wobei dann die erforderliche Leitungsverbindung zwischen dem Stromanschluss und der Förderpumpe die Handhabung des bekannten Bewässerungsgeräts behindern kann. Ein im Gerät selbst angeordneter und über eine externe Solareinrichtung oder auch ein Ladegerät aufgeladener Akkumulator erhöht aber das Gewicht des Bewässerungsgeräts, wodurch dessen Handhabung ebenfalls erschwert wird.

Der Erfindung liegt demgegenüber die Aufgabe zugrunde, eine verfahrbare Speichervorrichtung der eingangs erwähnten Art für Wasser zu schaffen, welche ohne Zufuhr von elektrischer Energie oder handbetätigten Pumpen einsetzbar ist. Dabei soll die Vorrichtung durch ein vergleichsweise geringes Gewicht ohne Anstrengung zum Einsatzort verfahrbar sein und ein Behälter-Füllvolumen für Wasser aufweisen, welches höher ist als das Füllvolumen normaler Gießkannen.

Erfindungsgemäß wird diese Aufgabe dadurch gelöst, dass der Behälter als Druckbehälter ausgebildet ist, dass Mittel zur Ausübung von Druckkräften auf das im Behälter eingefüllte Wasser vorgesehen sind, und dass zumindest der Auslass in einem auf den das Wasser einwirkenden Druckkräften diametral gegenüberliegenden Bereich des Behältes vorgesehen ist.

In bevorzugter Weiterbildung der Erfindung ist der Einlass des Druckbehälters mit einer druckdicht verschließbaren Einfüllarmatur für das unter Druck zugeführte Wasser verbunden. Der zum Ausbringen des Wassers am Einsatzort erforderliche Druck kann dann also dadurch erhalten werden, dass die Befüllung des Druckbehälters durch druckdichte Ankopplung der Einfüllarmatur mit dem Wasser-Leitungsnetz erfolgt. Zu diesem Zweck ist es von Vorteil, wenn die Einfüllarmatur als selbstschließende Füllkupplung ausgebildet ist, die beim Abkoppeln vom Wasserleitungsnetz selbsttätig schließt, so dass kein Druckverlust im Druckbehälter auftritt.

Bei einer vorteilhaften Weiterbildung der Erfindung kann der Einlass und der Auslass am Druckbehälter zu einer Füllund Entleerungsöffnung zusammengefasst sein, an welche eine einerseits mit der Einfüllarmatur und andererseits mit der Abgabearmatur verbundene Leitung angeschlossen ist.

Zweckmäßig wird dann in die an der gemeinsamen Einfüll- und Abgabeöffnung angeschlossenen Leitung ein Überdruckventil eingeschaltet.

Die Mittel zur Ausübung von Druckkräften auf das im Behälter abgefüllte Wasser werden dabei im einfachsten Fall von einem im Druckbehälter selbst oder einem am Druckbehälter angeschlossenen Druck-Ausgleichsbehälter vorgesehenen, unter Druckvorspannung stehenden Druckgas gebildet. Im einfachsten Fall wird das Druckgas von vorverdichteter Umgebungsluft, d.h. Druckluft gebildet.

Alternativ kann das Druckgas auch ein Inertgas, vorzugsweise Stickstoff, sein.

Um zu verhindern, dass bei vollständiger Entleerung des Druckbehälters auch Druckgas ungewollt austritt, empfiehlt es sich, in vorteilhafter Weiterbildung der Erfindung, den mit Wasser befüllbaren Teil des Druckbehälters von dem mit Druckgas gefüllten Teil des Druck- bzw. Druck-Ausgleichsbehälters durch eine hinreichend verformbare Trennmembran zu trennen.

In alternativer Ausgestaltung der Erfindung können die Mittel zur Ausübung von Druckkräften auf das im Behälter abgefüllte Wasser auch von einem im Druckbehälter selbst oder einem am Druckbehälter angeschlossenen Druck-Ausgleichsbehälter vorgesehenen, verschieblich und die beiden im jeweiligen Behälter gebildeten Kammern gegeneinander abdichtende Kolben gebildet werden, wobei der Kolben auf der der mit Wasser gefüllten Kammer gegenüberliegenden Seite durch eine Vorspannkraft beaufschlagt ist. Im einfachsten Fall ist der Kolben durch eine Gewichtskraft, d.h. sein Eigengewicht und/oder das Gewicht einer zusätzlich vorgesehenen Masse beaufschlagt. Alternativ kann der Kolben auch durch die Kraft einer oder mehrerer vorgespannter Federn bzw. wieder durch ein in der der mit Wasser gefüllten Kammer gegenüberliegenden Kammer vorgesehenes Druckgas beaufschlagt sein.

Die Auslass-Abgabearmatur wird mit dem Auslass des Druckbehälters zweckmäßig über einen Schlauch oder ein flexibles Rohr verbunden, so dass zum gezielten Aufbringen von Wasser an der Bewässerungsstelle lediglich die Abgabearmatur von der Bedienungsperson auf den zu bewässernden Bereich gerichtet und dann geöffnet werden muss.

An dem mit Rädern versehenen Fahrgestell der Vorrichtung wird zweckmäßig eine Deichsel vorgesehen, die dann in vorteilhafter Weiterbildung der Erfindung nicht nur das bequeme Verfahren des Speichers ermöglicht, sondern auch als Anschlussleitung an den Einlass des Druckbehälters ausgebildet sein kann, wobei dann im behälterabgewandten Endbereich dieser Anschlussleitung eine selbstschließende, druckdicht an eine Wasserzapfstelle anschließbare Füllkupplung angeordnet ist.

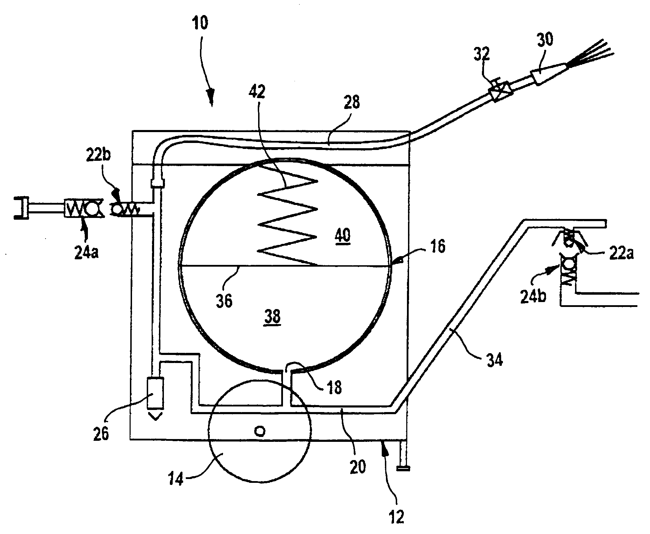

Die Erfindung ist in der folgenden Beschreibung eines Ausführungsbeispiels in Verbindung mit der Zeichnung näher erläutert, welche eine schematische Darstellung eines Ausführungsbeispiels einer erfindungsgemäßen verfahrbaren Speichervorrichtung zeigt.

Das in der Zeichnung schematisch dargestellte Ausführungsbeispiel der in ihrer Gesamtheit mit 10 bezeichneten erfindungsgemäßen Speichervorrichtung weist einen in einem Einachs-Fahrgestell 12 mit Rädern 14 angeordneten Druckbehälter 16 auf. Der Druckbehälter ist im dargestellten Fall in seinem unteren Bereich mit einer als kombinierter Ein- und Auslass für das zu speichernde Wasser dienenden Öffnung 18 versehen, an welcher eine Leitung 20 angeschlossen ist, die hier zu zwei an unterschiedlichen Stellen am Fahrgestell 12 vorgesehenen selbstschließenden Füllkupplungen 22a bzw. 22b geführt ist. Solche selbstschließende Füllkupplungen sind - beispielsweise als Kupplungen für Gartenschläuche - zum Ankuppeln an einem entsprechenden Gegenkupplung versehenen Wasserhahn an sich bekannt. In der Zeichnung sind dementsprechend den Füllkupplungen 22a bzw. 22b jeweils zugeordnete an eine Netzwasserleitung angeschlossene bzw. anschließbare Gegenkupplungen 24a bzw. 24b jeweils in nicht mit den zugeordneten Füllkupplungen gekuppelten Zustand schematisch dargestellt.

Ein in die Leitung 20 eingeschaltetes, auf den Betriebsdruck des Behälters bzw. den Druck des Wasserleitungsnetzes einstellbares oder eingestelltes Überdruckventil 26 stellt sicher, dass es nicht zu einem unzulässigen Druckaufbau im Behälter- /Leitungssystem kommen kann.

An die Leitung 20 ist außerdem eine Wasser-Abgabeleitung 28 in Form eines flexiblen Rohrs oder eines Druckschlauchs angeschlossen, an dessen freiem Ende eine wahlweise zu öffnende und zu schließende Abgabearmatur vorgesehen ist, die in der Zeichnung schematisch als Sprühdüse 30 mit vorgeschaltetem Betätigungsventil 32 dargestellt ist. Alternativ kann die Abgabearmatur auch von den bei Gartenschlauchsystemen bekannten Armaturen wie Bewässerungspistolen, Gießstäben o.dgl. gebildet werden.

Die Füllkupplung 22 ist beim in der Zeichnung dargestellten Ausführungsbeispiel am äußeren freien Ende einer aus Rohrmaterial hergestellten Deichsel 34 angeordnet, wobei das Deichselrohr gestellseitig an die Leitung 20 angeschlossen ist.

Der Druckbehälter 16 ist im dargestellten Ausführungsbeispiel durch eine mittige verformbare Membran 36 in eine untere Kammer 38 und eine obere Kammer 40 unterteilt. Die untere Kammer 38 ist über die Leitung 20 mit Wasser befüllbar und verkleinert dann die obere Kammer 40, in der eine Schraubenfeder 42 zur Druckbeaufschlagung der Membran 36 dargestellt ist. In der Praxis wird anstelle der unter Druckvorspannung stehenden Schraubenfeder bevorzugt ein Inertgas, wie Stickstoff, Kohlendioxid etc. als kompressibles Druckmedium in der Kammer 40 vorgesehen, dessen Druck sich also bei zunehmender Füllmenge mit Wasser erhöht. Die Befüllung der Kammer 38 des Druckbehälters 16 aus dem Wasserleitungsnetz erfolgt solange, bis der Druck des in der Kammer 40 enthaltenen Druckgases gleich dem Druck des Wasserleitungsnetzes entspricht oder das Überdruckventil öffnet. Dann kann die am Wasserleitungsnetz angeschlossene Füllkupplung 22a bzw. 22b von der Gegenkupplung 24a, 24b abgekoppelt werden und die erfindungsgemäße Speichervorrichtung kann an den Einsatzort verfahren werden. Dort wird die Abgabearmatur auf den zu bewässernden Bereich gerichtet und geöffnet. Der in der Kammer 40 herrschende und über die verformbare Membran 36 auf den in der Kammer 38 enthaltenen Wasservorrat einwirkende Überdruck verdrängt das Wasser aus dem Druckbehäler 16 über die Leitung 20 und die Abgabeleitung 28 zur Abgabearmatur. Sobald der Wasservorrat in der Kammer 38 erschöpft ist, wird die Speichervorrichtung dann zur nächstgelegenen Zapfstelle des Wasserleitungsnetzes zurückgefahren. Durch Ankoppeln der Füllkupplung 22a oder 22b an der Zapfstelle wird dann der Wasservorrat in der Kammer 38 wieder aufgefüllt.

Es ist ersichtlich, dass im Rahmen des Erfindungsgedankens Abwandlungen und Weiterbildungen des beschriebenen Ausführungsbeispiels verwirklichbar sind, die sich z.B. auf die Ausgestaltung des Drucktanks beziehen. Anstelle einer Unterteilung des Drucktanks durch eine verformbare Membran kommt auch eine Ausgestaltung nach Art eines durch einen Kolben in zwei Kammern unterteilten Zylinders in Frage. Ein wesentliches Merkmal aller Ausführungsbeispiele der erfindungsgemäßen Speichervorrichtung liegt darin, dass zum Ausbringen des im Drucktank gespeicherten Wassers keine aufwendigen Pumpen und somit keine Antriebsenergie für solche Pumpen erforderlich ist, sondern dass diese Energie zugleich mit der Befüllung des Vorratstanks in Form von Druckenergie aus dem Wasserleitungsnetz entnommen wird. Über die Verwendung als verfahrbare Speichervorrichtung für reines Wasser hinaus kommt auch ein Einsatz für andere Flüssigkeiten, beispielsweise Reinigungs- oder Sprühflüssigkeiten in Frage, bei denen im Wasser zusätzliche Wirkstoffe gelöst enthalten sind.

## Patentansprüche

1. Speichervorrichtung zum Speichern, Transportieren und Abgeben von Wasser mit einem auf einem Fahrgestell gehalterten, über einen Einlass mit Wasser befüllbaren Behälter und mit einer an einem Auslass des Behälters angeschlossenen, wahlweise zu betätigenden Abgabearmatur,
**dadurch gekennzeichnet,**
dass der Behälter als Druckbehälter (16) ausgebildet ist,
dass Mittel zur Ausübung von Druckkräften auf das im Behälter (16) eingefüllte Wasser vorgesehen sind, und
dass zumindest der Auslass in einem den auf das Wasser einwirkenden Druckkräften diametral gegenüberliegenden Bereich des Behälters (16) vorgesehen ist.

2. Speichervorrichtung nach Anspruch 1, dadurch gekennzeichnet, dass der Einlass des Druckbehälters (16) mit einer druckdicht verschließbaren Einfüllarmatur für das unter Druck zugeführte Wasser verbunden ist.

3. Speichervorrichtung nach Anspruch 2, dadurch gekennzeichnet, dass die Einfüllarmatur als selbstschließende Füllkupplung (22a; 22b) ausgebildet ist.

4. Speichervorrichtung nach Anspruch 2 oder 3, dadurch gekennzeichnet, dass der Einlass und der Auslass am Druckbehälter (16) zu einer Füll- und Entleerungsöffnung (18) zusammengefasst sind, an welcher eine einerseits mit der Einfüllarmatur und andererseits mit der Abgabearmatur verbundene Leitung (20) angeschlossen ist.

5. Speichervorrichtung nach Anspruch 4, dadurch gekennzeichnet, dass in der an der gemeinsamen Einfüll- und Abgabeöffnung (18) angeschlossene Leitung (20) ein Überdruckventil (26) eingeschaltet ist.

6. Speichervorrichtung nach einem der Ansprüche 1 bis 5, dadurch gekennzeichnet, dass die Mittel zur Ausübung von Druckkräften auf das im Behälter abgefüllte Wasser von einem im Druckbehälter (16) selbst oder einem am Druckbehälter angeschlossenen Druck-Ausgleichsbehälter vorgesehenen, unter Druckvorspannung stehenden Druckgas gebildet werden.

7. Speichervorrichtung nach Anspruch 6, dadurch gekennzeichnet, dass das Druckgas von vorverdichteter Umgebungsluft gebildet wird.

8. Speichervorrichtung nach Anspruch 6, dadurch gekennzeichnet, dass das Druckgas ein Inertgas, vorzugsweise Stickstoff, ist.

9. Speichervorrichtung nach einem der Ansprüche 6 bis 8, dadurch gekennzeichnet, dass der mit Wasser befüllbare Teil (Kammer 38) des Druckbehälters (16) von dem mit Druckgas gefüllten Teil (Kammer 40) des Druck- bzw. Druck-Ausgleichsbehälters durch eine verformbare Membran (36) getrennt ist.

10. Speichervorrichtung nach einem der Ansprüche 1 bis 5, dadurch gekennzeichnet, dass die Mittel zur Ausübung von Druckkräften auf das im Behälter abgefüllte Wasser von einem im Druckbehälter selbst oder einem am Druckbehälter (16) angeschlossenen Druck-Ausgleichsbehälter vorgesehenen verschieblichen und die beiden im jeweiligen Behälter gebildeten Kammern gegeneinander abdichtenden Kolben gebildet werden, und dass der Kolben auf der der mit Wasser gefüllten Kammer gegenüber liegenden Seite durch eine Vorspannkraft beaufschlagt ist.

11. Speichervorrichtung nach Anspruch 10, dadurch gekennzeichnet, dass der Kolben durch eine Gewichtskraft beaufschlagt ist.

12. Speichervorrichtung nach Anspruch 10, dadurch gekennzeichnet, dass der Kolben durch die Kraft einer oder mehrerer vorgespannter Federn beaufschlagt ist.

13. Speichervorrichtung nach Anspruch 10, dadurch gekennzeichnet, dass der Kolben durch ein in der der wassergefüllten Kammer gegenüber liegenden Kammer vorgesehenes Druckgas beaufschlagt ist.

14. Speichervorrichtung nach einem der Ansprüche 1 bis 13, dadurch gekennzeichnet, dass die Auslass-Abgabearmatur mit dem Auslass des Druckbehälters über einen Schlauch oder ein flexibles Rohr (28) verbunden ist.

15. Speichervorrichtung nach einem der Ansprüche 1 bis 14, dadurch gekennzeichnet, dass das Fahrgestell (12) mit einer Deichsel (34) zum Verfahren der Vorrichtung versehen ist, und dass die Deichsel (34) selbst als Anschlussleitung an den Einlass des Druckbehälters (16) ausgebildet ist und in ihrem behälterabgewandten Endbereich mit einer selbstschließenden, druckdicht an eine Wasserzapfstelle anschließbaren Füllkupplung (22a) versehen ist.
